# EUROPEAN PATENT SPECIFICATION

(11) **EP 2 145 554 B1**
(45) Date of publication and mention of the grant of the patent: **07.03.2012**
(21) Application number: 08425472.1
(22) Date of filing: 10.07.2008
(51) Int. Cl.: A43B 17/02, A43B 17/14, A43D 8/36

(54) **Insole for shoe**
Schuheinlegesohle
Semelle intérieure pour chaussure

(43) Date of publication of application: 20.01.2010
(73) Proprietor: Valfussbett S.r.l., 36078 Valdagno (VI) (IT)
(72) Inventor: Guiotto, Dino, 36078 Valdagno (VI) (IT)
(74) Representative: Garavelli, Paolo

(56) References cited:
- EP-A- 1 504 688
- WO-A-2004/012548
- AU-A- 6 523 580
- US-A- 5 632 103
- US-A1- 2004 250 450

## Description

The present invention refers to an insole for shoes. An insole according to the preamble of Claim 1 is disclosed in US-A1-2004/0250450 and in WO-A1-2004/012548.

Insoles are known in the art, and are inserted inside a shoe overlapping the shoe sole, made of at least one layer of plastic material, usually polyester, polyurethan, PE foams or the like, shaped in a bearing for the sole and in a rear part related to the foot heel, such layer having a typically rounded shape free from projections. Through following steps of known manufacturing processes, in the rear part of such layer, an anatomical thickening appendix is then applied, specifically shaped and commonly called "tallonetta (heel-support)". In order to guarantee the necessary sturdiness to the insole and for better wearing it, such heel-support must then be necessarily covered with at least one layer of leather, consequently realising a costly insole whose global thickness is not neglectable.

US-A-5 632 103 discloses an insole having a continuous and peripheral edge which is used to form the heel portion of the insole being folded back only in its rear portion to create a projection for the heel of the foot.

Moreover, known insoles, being traditionally manufactured separate from shoes, very often mate only approximately with the vamp shape inside which they must be inserted, consequently resulting as scarcely efficient, uncomfortable and aesthetically unpleasant.

Therefore, object of the present invention is solving the above prior art problems by providing an insole for shoes in which the heel-support is integral with the layer of plastic material that is the sole bearing, the rear part and the portion related to the sole centre of the insole itself, resulting more inexpensive and more easily manufactured than traditional insoles.

Another object of the present invention is providing an insole for shoes in which the heel-support can be covered with more inexpensive, lighter and less thick materials than leather.

Moreover, an object of the present invention is providing an insole for shoes equipped on its perimeter with modellable side projections depending on the shoe, so that such insole can be adapted to internal sizes and shapes of the shoe inside which it must be inserted.

The above and other objects and advantages of the invention, as will appear from the following description, are obtained with an insole for shoes as claimed in claim 1.

Preferred embodiments and non-trivial variations of the present invention are the subject matter of the dependent claims.

It will be immediately obvious that many variations and modifications (for example related to shape, sizes, arrangements and parts with equivalent functionality) can be made to what is described, without departing from the scope of the invention as appears from the enclosed claims.

The present invention will be better described by some preferred embodiments thereof, provided as a nonlimiting example, with reference to the enclosed drawings, in which:

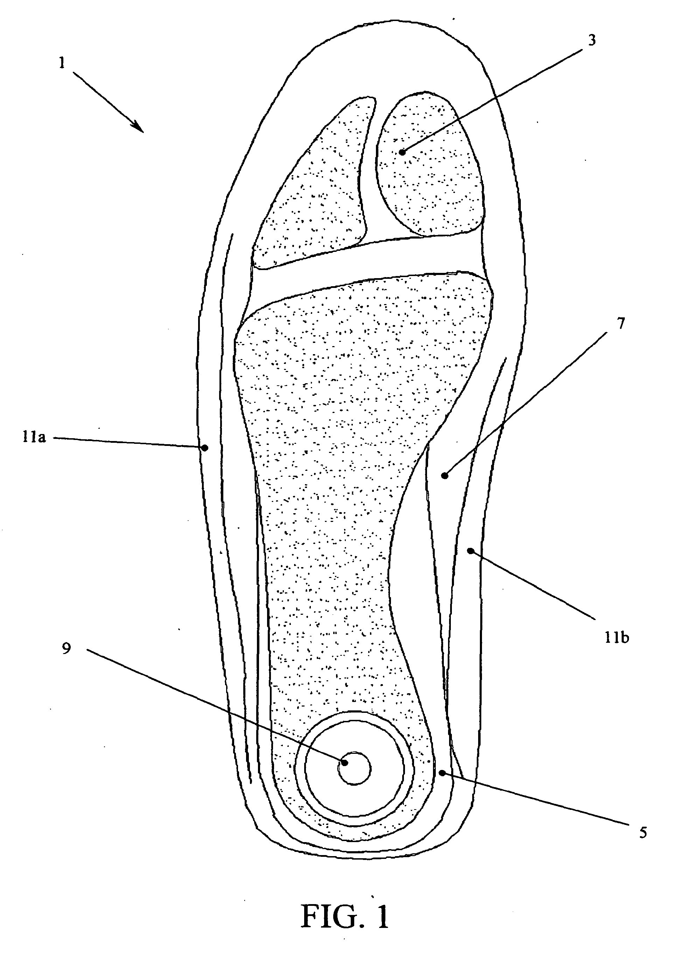

- FIG. 1 shows a plan view of a preferred embodiment of the insole for shoes according to the present invention; and
- FIG. 2 shows a perspective view of the insole for shoes of FIG. 1.

With reference to the Figures, it is possible to note that the insole 1 according to the present invention comprises a bearing portion of the sole 3, a rear portion 5 related to the foot heel, such bearing portion of the sole 3 and such rear portion 5 being joined by an intermediate bearing portion of the sole 7 center: in particular, the rear portion 5 of the insole 1 is integral with at least one heel-support 9.

The heel-support 9 ia obtained in the same material of the bearing of sole 3, rear portion 5 and intermediate bearing portion of the sole 7 center without seams.

Obviously, the insole 1 according to the present invention can be made of any material suitable for this purpose, such as, for example, a plastic material based on polyester, polyurethane, PE foams or the like.

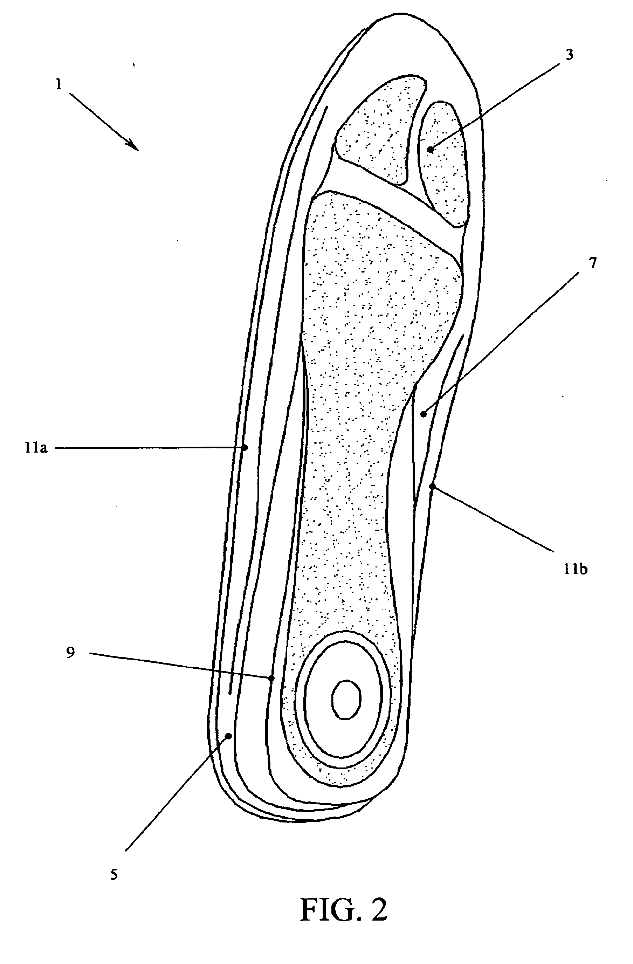

In particular, as shown for example in FIG. 2, the heel-support 9 is made as at least one shimming with progressively increasing height from the intermediate bearing portion of the sole 7 centre towards the rear part of the insole 1 related to the rear portion 5.

The insole 1 according to the present invention, being structurally more resistant than traditional insoles in which the heel-support is separate and must afterwards be glued onto the rear portion of the insole itself, can be covered, at least only in the portion of the heel-support 9, by at least one layer of more inexpensive and ligher covering material than the traditionally used leather, such covering material being preferably hide.

The insole 1 according to the present invention can further be equipped on its perimeter with side projections 11a, 11b that can be modelled depending on internal sizes and shapes of a specific shoe inside which the insole 1 itself must be inserted, also such modellable side projections 11a, 11b being integral with the bearing for sole 3, rear portion 5 and intermediate bearing portion of the sole 7 centre of the insole 1 and obtained with the same material of this latter one. In particular, the modellable side projections 11a, 11b of the insole 1 can be modelled depending on internal sizes and shapes of a specific shoe by using a suitable hollow punch (not shown). The modellable side projections 11a, 11b are made as at least one continuous peripheral and perimeter edge of the insole 1 itself.

Advantageously, it is then possible, through the above hollow punch, to model the modellable side projections 11a, 11b, and in particular the modellable side projection 11b related to the bearing portion of the sole 7 centre obtaining a "custom-made" insole 1 that perfectly mates with the shoe vamp, highly improving the mutual closure of insole 1 and vamp itself.

In a preferred variation thereof, the modellable side projections 11a, 11b can be made in such a way as to have an increasing height from outside towards the centre of the insole 1.

Obviously, the surfaces of the insole 1 according to the present invention, particularly aimed to get in contact with a foot, and in particular heel-support, sole 3 bearing, and/or intermediate bearing portion of the sole 7 centre, can be provided with any particular, substantially known anatomic arrangement, made for example through suitable cushions, swellings or ribs, suitably arranged, without therefore departing from the scope of the present invention.

A process for manufacturing an insole 1 like the previously-described one comprises the steps of:
a) providing at least one die defining such insole 1, namely defining at least the sole 3 bearing, the rear portion 5, the intermediate bearing portion of the sole 7 centre and the heel-support 9; the die also defines the modellable side projections 11a, 11b;
b) molding such insole 1 through such die in an adequate plastic material; such step can obviously comprise any molding technology adapted for such purpose, such as, for example, injection casting and thermoforming. Also in this case, the plastic material is preferably a foam of polyester, polyurethane, PE or the like;
c) extracting such insole 1 from the die.

The insole 1 can therefore be obtained through said process advantageously in a single molding step, due to the fact that the heel-support is integral with the insole itself and is made through the same molding step and of the same material of the other portions, and in particular of the sole bearing, the rear portion, the intermediate bearing portion of the sole centre, and possibly the modellable side projections, composing the insole according to the present invention. In particular, by suitably modifying the die, it is possible to define heights at will, and possibly the growth gradients of such heights, of the modellable side projections of the insole 1.

The process can further comprise the step, following step c), of covering the insole, or at least the heel-support, with at least one layer of a covering material, such as for example hide.

## Claims

1. Insole (1) for a shoe comprising a bearing portion (3) of a foot sole, a rear portion (5) adapted to bear a foot heel, said bearing portion (3) and said rear portion (5) being joined by an intermediate portion (7) adapted to bear the central part of the foot sole, said insole (1) further comprising a heel-support (9) adapted to be operatively coupled with said rear portion (5) in order to provide said insole (1) with a thickening appendix for the foot heel, said heel-support (9) being made integral with said rear portion (5), said heel-support (9) being made of the same material of said bearing portion (3), of said rear portion (5) and of said intermediate portion (7), said heel-support (9) being at least one shimming with progressively increasing height from said intermediate portion (7) towards said rear portion (5), **characterised in that** the insole (1) further comprises on its perimeter side projections (11a, 11b) adapted to be modeled depending on internal sizes and shapes of a shoe and fitted into the shoe inside which said insole (1) is insertable, said side projections (11a, 11b) being integral with said bearing portion (3), said rear portion (5) and said intermediate portion (7) and being made of the same material, said side projections (11a, 11b) being a continuous peripheral and perimeter edge, of said insole (1), and **in that** said side projections (11a, 11b) can be modelled through at least one hollow punch in order to obtain a custom-made insole to mate a shoe vamp.

2. Insole (1) according to Claim 1, **characterised in that** at least said heel-support (9) is covered through at least one layer of covering material that is more inexpensive and lighter than leather.

3. Insole (1) according to Claim 2, **characterised in that** said covering material is hide.

## Patentansprüche

1. Sohle (1) für einen Schuh mit einem Auflageteil (3) für eine Fußsohle, einem hinteren Teil (5), der dazu dient, die Ferse des Fußes zu stützen, der genannte Auflageteil (3) und der genannte hintere Teil (5) sind durch einen mittleren Teil (7) verbunden, der dazu dient, den mittleren Teil der Fußsohle zu stützen, die genannte Sohle (1) schließt außerdem ein Fersenstück (9) ein, das dazu dient, operativ mit dem genannten hinteren Teil (5) verbunden zu werden, um die genannte Sohle (1) mit einer zusätzlichen Verstärkung für die Ferse des Fußes auszustatten, das genannte Fersenstück (9) wird ganz mit dem genannten hinteren Teil (5) hergestellt, das genannte Fersenstück (9) ist aus dem gleichen Material wie der genannte Auflageteil (3), der genannte hintere Teil (5) und der genannte mittlere Teil (7) hergestellt, das genannte Fersenstück (9) ist mindestens eine Verstärkung mit schrittweise ansteigender Höhe vom genannten mittleren Teil (7) in Richtung des genannten hinteren Teils (5), und ist **dadurch gekennzeichnet, dass** die Sohle (1) außerdem an ihrem Umfang seitliche Überstände (11a, 11b) einschließt, die dazu dienen, je nach den Abmessungen und den internen Formen eines Schuhs modelliert und in einen Schuh eingesetzt zu werden, in den die genannte Sohle (1) eingelegt werden kann, die genannten seitlichen Überstände (11a, 11b) sind ganz mit dem genannten Auflageteil (3), dem genannten hinteren Teil (5) und dem genannten mittleren Teil (7) realisiert und aus dem gleichen Material hergestellt, die genannten seitlichen Überstände (11a, 11b) sind ein fortlaufender Rand und Umfang der genannten Sohle (1), sowie **dadurch gekennzeichnet, dass** die genannten seitlichen Überstände (11a, 11b) mit mindestens einem Locheisen modelliert werden können, um eine personalisierte Sohle zu erhalten, die mit dem Obermaterial eines Schuhs verbunden werden kann.

2. Sohle (1) gemäß Patentanspruch 1, die **dadurch gekennzeichnet ist, dass** mindestens das genannte Fersenstück (9) durch mindestens eine überdeckende Materialschicht abgedeckt ist, die kostengünstiger und leichter als Leder ist.

3. Sohle (1) gemäß Patentanspruch 2, die **dadurch gekennzeichnet ist, dass** das genannte überdeckende Material Kunstleder ist.

## Revendications

1. Semelle (1) pour une chaussure comprenant une portion d'appui (3) d'une plante d'un pied, une portion arrière (5) apte à soutenir un talon de pied, ladite portion d'appui (3) et ladite portion arrière (5) étant raccordées par une portion intermédiaire (7) apte à soutenir la partie centrale de la plante pied, ladite semelle (1) comprenant en outre une talonnette (9) apte à être accouplée opérativement avec ladite portion arrière (5) dans le but de doter ladite semelle (1) d'une appendice d'épaississement pour le talon du pied, ladite talonnette (9) étant réalisée intégralement avec ladite portion arrière (5), ladite talonnette (9) étant fait du même matériel de ladite portion d'appui (3), de ladite portion arrière (5) et de ladite portion intermédiaire (7), ladite talonnette (9) étant au moins un épaississement avec hauteur progressivement croissante da ladite portion intermédiaire (7) vers ladite portion arrière (5), **caractérisée par le fait que** la semelle (1) comprend en outre sur son périmètre des saillies latérales (11a, 11b) aptes à être modelées selon des dimensions et des formes internes d'une chaussure et insérées dans la chaussure à l'intérieur de laquelle ladite semelle (1) peut être insérée, lesdites saillies latérales (11a, 11b) étant intégrales avec ladite portion d'appui (3), ladite portion arrière (5) et ladite portion intermédiaire (7) et étant faites du même matériel, lesdites saillies latérales (11a, 11b) étant un bord périphérique et périmétrique continu de ladite semelle (1), et **par le fait que** lesdites saillies latérales (11a, 11b) peuvent être modelées au moyen au moins d'un emporte-pièce dans le but d'obtenir une semelle personnalisée à accoupler à une empeigne de chaussure.

2. Semelle (1) selon la revendication 1, **caractérisée par le fait qu'**au moins ladite talonnette (9) est recouverte au moyen d'au moins une couche de matériel de revêtement plus économique et léger du cuir.

3. Semelle (1) selon la revendication 2, **caractérisée par le fait que** ledit matériel de revêtement est en cuir.
